Europäisches Patentamt

European Patent Office

Office européen des brevets

(19)

(11) Publication number: **0 047 158**
**B2**

(12) # NEW EUROPEAN PATENT SPECIFICATION

(45) Date of publication of the new patent specification:
12.04.89

(51) Int. Cl.⁴: **C 04 B 16/02,** C 04 B 16/06

(21) Application number: 81303957.5

(22) Date of filing: 28.08.81

(54) A process for the manufacture of fibre reinforced shaped articles.

(30) Priority: 29.08.80 DK 3679/80
04.08.81 DK 3472/81
03.12.80 DK 3670/81

(43) Date of publication of application:
10.03.82 Bulletin 82/10

(45) Publication of the grant of the patent:
21.03.84 Bulletin 84/12

(45) Mention of the opposition decision:
12.04.89 Bulletin 89/15

(84) Designated Contracting States:
AT CH DE FR GB LI

(73) Proprietor: Dansk Eternit-Fabrik A/S,
Sohngaardsholmsvej 2 P.O. Box 763, DK-9100 Aalborg
(DK)

(72) Inventor: Bach, Niels, 77 Vigerslev Alle, DK-2500 Valby
Copenhagen (DK)
Inventor: Frost, Jens Christian, 77 Vigerslev Alle,
DK-2500 Valby Copenhagen (DK)
Inventor: Tram, Bent, 77 Vigerslev Alle, DK-2500 Valby
Copenhagen (DK)
Inventor: Larsen, Helle, 77 Vigerslev Alle, DK-2500 Valby
Copenhagen (DK)

(74) Representative: Robinson, Anthony John Metcalf et al,
Kilburn & Strode 30 John Street, London, WC1N 2DD
(GB)

(56) References cited:
EP-A- 0 012 546
EP-A- 0 033 796
DE-A- 2 624 130
DE-A- 2 819 794
DE-A- 2 854 967
DE-A- 3 002 484
DE-A- 3 015 734
DE-C- 2 463 044
GB-A- 1 511 270
GB-A- 1 605 004
GB-A- 2 037 837

(56) References cited: (continuation)
Klos, H: Asbestzement, Springer Verlag, Wien-New
York, 1967, pages 107, 108
Hannant, D. J.: Fibre Cements and Fibre Concretes,
John Wiley and Sons 1978, Chapter 2 and pages 84-86
Ortlepp, W.: Industrielle Möglichkeiten und Ergebnisse
des Asbestersatzes in Asbestzementprodukten,
BMFT-Forschungsbericht T79-122, 1979, pages 7-9, 12,
14, 16, 22-39

## Description

The present invention relates to a process for the manufacture of fibre reinforced shaped articles with a matrix of cured inorganic binder comprising the steps of preparing an aqueous slurry of reinforcing fibres, retention fibres, hydraulic inorganic binder particles and possibly other additives containing an excess of water in relation to the amount necessary to secure hydration of the inorganic binder, forming green shaped articles by dewatering the slurry, and curing the green shaped articles.

It is known to use a number of different types of fibres in the manufacture of fibre reinforced shaped articles, such as sheets and boards used in the building material sector. One of the most important examples of products of this type is asbestos cement products.

The most common technologies used by the manufacture of such products are known as the Hatschek method and the Magnani method.

It is a common feature of these methods and other less frequently used methods, like the Head Box method and the Fourdrinier method, that they comprise the three above steps: initially preparing an aqueous slurry of cement particles and asbestos fibres, subsequently forming green shaped articles by dewatering, excess water being sucked away, and finally curing the green shaped articles to the final products, e.g. by heat curing, autoclaving or at room temperature.

According to the Magnani-method a slurry is used having a relatively low W/S ratio, i.e. weight ratio water to solid material, usually in the range 1–2. This rather thick slurry is applied directly on an endless permeable belt providing the form desired for the sheet, dewatering being performed by combined suction and compression.

According to the Hatschek method a primary aqueous slurry having a W/S ratio equal to about 2 is formed, this slurry is then diluted by adding an amount of water corresponding to approximately 5–10 times the volume of the primary slurry. The final slurry is introduced into a Hatschek machine in which the solid material is picked up from a slurry bath by a rotary sieve cylinder which transfers the material to a continuously moving permeable belt, where the material is further dewatered. Then the material is transferred as a thin layer onto a rotating cylinder, called the forming roll, and when a sufficient number of thin layers have been wound upon the forming roll, the material is removed as a green board capable of being shaped and compressed before the curing.

Asbestos fibres possess special properties which make them suitable for these processes. Not only do they show good reinforcement properties in the final product, but also excellent properties during the sheet formation process.

However, various limitation on the use of asbestos fibres have made it necessary to develop alternative fibre reinforced materials which can be produced on the machines used for the manufacture of asbestos cement products, but reinforced with non asbestos fibres. Various fibres, including glass fibres, steel fibres, and natural and synthetic organic fibres, have been suggested as replacement of asbestos fibres.

None of the experiments dealing with replacing asbestos fibres by only one other type of fibres, have however, been completely successful.

Considerable problems often arise during the production process, as it has been difficult to provide an approximately homogeneous distribution of the fibres in the slurry; both glass, cellulose and a number of plastic fibres show, for instance, a marked tendency to balling and lump formation instead of distributing themselves evenly in the slurry. The tendency to balling particularly grows with: decreasing W/S ratio, increasing fibre concentration and increasing length and elasticity of the fibres. By the Hatschek method a non-homogeneous fibre distribution may manifest itself in the final slurry by formation of clouds exhibiting an increased density of fibres and binder particles. These clouds lead to problems during take up on the rotary sieve cylinder.

Another problem arises during the dewatering where e.g. the glass fibres and most of the plastic fibres are incapable of retaining the binder particles which consequently are sucked away together with the water phase. These poor retention properties also manifest themselves by a non-homogeneous sheet structure, which by the Hatschek method may lead to delamination of the green or cured sheets.

Poor retention both by the Magnani and by the Hatschek method further leads to loss of plasticity of the green sheets, whereby subsequent shaping is impeded, and also to a tendency to moisture movements of the green sheets, which may lead to formation of micro cracks already during the curing.

Finally, the quality of the end product may be unsatisfactory. Glass fibre reinforced cement boards may thus show fine initial strengths, but due to chemical decomposition of the glass fibres in the alkaline matrix the strength properties often drop catastrophically in short time. Cement boards reinforced with spun plastic fibres, e.g. of nylon or polyolefine, often show poor strength, probably due to poor anchoring of the fibres in the matrix. Inhomogeneous fibre distribution may result in fibres protruding through the surface of the sheets, causing reduced weathering and frost resistance properties.

It has been suggested to modify the essential properties of the slurry by addition of a number of additives including organic flocculants, dispersion agents, wetting agents, thickening agents and plastifying agents.

By this certain problems may be eliminated, however often at the price of making other problems the more marked.

It is for example possible to provide an improved retention of binder particles by adding a flocculant to the slurry. In return fine continuous channels may be formed in the final product, leading to reduced strength properties. E.g. GB application No. 2 035 286 suggests the use of a combination of finely divided siliceous materials having a small particle size, preferably less than 10 micron, and a flocculant as a size coating on glass fibres and in a slurry of cement particles and glass fibres in order to produce high strength glass fibre reinforced cementitious products.

Addition of organic thickening and dispersion agents may affect the hardening properties of the hydraulic binder adversely, thus necessitating futher addition of hardening accelerators, but as the process water, for environmental reasons, is recirculated, it is difficult to keep the concentrations of these additives at the desired values.

When comparing the properties of asbestos fibres with those of the proposed replacement fibres, it is seen that the properties of the asbestos fibres are special in at least three respects: first of all the asbestos fibres have a specific surface area which is far larger than most types of replacement fibres. Secondly, the asbestos fibres exhibit a far larger variation in size than the replacement fibres. Thirdly, the asbestos fibres have hydrophilic properties which by far excess those of most of the suggested replacement fibres.

These properties probably all play a significant part for the easiness by which it is possible to manufacture and handle the green asbestos cement sheets.

Consequently, it has been proposed to replace the asbestos fibres not by one but by two types of fibres, reinforcing fibres acting as reinforcing elements in the cured board, and retention fibres typically having a length about one tenth the length of the reinforcing fibres and preferably being fibrillated and having a hydrophilic character.

Due to the large specific surface of the retention fibres a lattice structure is formed ensuring an even distribution of the binder particles. During the suction of the excess water when manufacturing the green sheets this lattice structure acts as a filter, partly preventing the binder particles from being sucked away together with the water phase, partly preventing the binder particles from being drawn away from the surface of the reinforcing fibres. Hydrophilic retention fibres furthermore ensure an appropriate retention of water in the green sheets.

DE OS 2 819 794 discloses for instance a process for the manufacture of fibre reinforced shaped article with cellulose fibres as retention fibres and a special type of polypropylene fibres as reinforcing fibres. However, when preparing as well a Magnani as a primary Hatschek slurry, problems may occur due to formation of lumps. By the Hatschek method further problems may arise due to formation of the above-mentioned clouds in the final slurry.

These problems can be solved as described in Danish patent application No. 4 926/78 by passing the slurry through a high shear field in a narrow space between two surfaces moving at high velocity relatively to eacht other. It is further mentioned that the incorporation of a fine filler such as silica dust consisting of spherical particles having a specific surface area about 25 m²/g in the slurry improves the processability of the slurry.

As the high shear treatment is an energy consuming extra work operation causing heavy wear, and as the addition of the fine silica dust often causes problems of filtration in case of the Magnani method and poor retention in case of the Hatschek method, it is desirable to find other solutions to the lump formation problem.

In EP patent application No. 0 012 546 addition of ball clay to a slurry of cement particles, reinforcing and retention fibres is suggested as a means of reducing shrinkage of the green boards during curing of the cement.

However, the basic problem of avoiding the formation of fibre lumps in the slurry in a simple way and providing a slurry with excellent dewatering properties remains to be solved.

It has now surprisingly been found that this problem can be solved by a modified slurry preparation.

Hence, the present invention relates to a process for the manufacture of fibre reinforced shaped articles with a matrix of cured inorganic binder comprising the steps of preparing an aqueous slurry of reinforcing fibres, retention fibres, hydraulic inorganic binder particles and possibly other additives and containing an excess of water in relation to the amount necessary to secure hydration of the inorganic binder, forming green shaped articles by dewatering the slurry, and curing the green shaped articles, which is characterized in that the preparation of the aqueous slurry comprises the steps of initially preparing an aqueous pulp of asbestosfree reinforcing and retention fibres containing colloidal hydrophilic inorganic particles suspended in the water phase, and subsequently forming the aqueous slurry by suspending the hydraulic inorganic binder particles and possibly other additives in said aqueous pulp, additional water being added, if desired.

Hydraulic inorganic binders include: Portland cement; Sorel cement; alumina cement; natural cement; cements containing granulated blast furnace slag, such as slag cement, Portland blast furnace cement and supersulphated cement; pozzolanic cements containing one of the above mentioned cements and/or artificial pozzolanas, such as kieselgur, trass, Santorin earth, fly ash and the above mentioned silica dust; and gypsum plaster, in amounts of 98 to 60% by weight calculated on total solid material.

Retention fibres include: refined cellulose fibres or synthetic organic fibres, such as highly fibrillated polyethylene or polypropylene fibres, such as Pulpex from Solvay et Cie. S.A., Ferlosa from Montedison, Carifil from Shell Chemicals and FPE from Schwarzwälder Textilwerke, preferably cellulose fibres refined to a fineness of 20–60 degrees on the Schopper Riegler scale, added in amounts of 3–8% by weight when using

the Hatschek method and 0.25–4% by weight when using the Magnani method, in both cases calculated on total solid material.

Reinforcing fibres include: natural and synthetic organic or inorganic fibres, preferably added in an amount corresponding to 0.2–8% weight of solids in aqueous slurry.

Preferred natural organic reinforcing fibres are cellulose fibres, such as Kraft cellulose, hemp cellulose, abaca cellulose, cotton cellulose.

Preferred synthetic organic reinforcing fibres are polyamide, polyester and polyolefine fibres, in particular nylon 6, nylon 11, polyethylene and polypropylene fibres, especially chopped, fibrillated polypropylene fibres having a tensile strength of at least 4000 kp/cm² and an elongation at rupture of most 8%, preferably chopped to a length of about 12 mm.

Preferred inorganic reinforcing fibres are glass fibres and stonewool fibres.

Preferred reinforcing fibres are cellulose fibres in amounts of 1–7% by weight and the above mentioned polypropylene fibres in amounts of 0.20 to 4% by weight, in both cases calculated on total solid material.

The preferred colloidal hydrophilic inorganic particles are those included in the group comprising:

1) hydrophilic silica particles with a specific surface above 100 m²/g and preferably with an average particle diameter about 0.012 micron,

2) refined needle or plate shaped clay particles with a specific surface above 75 m²/g and preferably a thickness about 0.012 micron,

3) colloidal clay particles formed by suspending naturally occuring, preferentially sedimentary, clay in water, preferably in the presence of a clay dispersion agent, such as sodium hexametaphosphate, sodium pyrophosphate, water glass, sodium and potassium hydroxide and carbonate, preferably with a specific surface above 25 m²/g.

Preferred hydrophilic silica particles are commercially available as silica sols, such as Ludox® from du Pont, Syton® from Monsanto Co., Nalcoag® from Nalco Chem. Co., and Nyacol® from Nyanza Inc., and as low density silica powders and finely divided gels, such as Cab-O-Sil® from Cabot Corp., Syloid® from Davison Div., Grace Co., Santocel® from Monsanto Co., Vaylar® from PPG Industries, Aerosil® from Degussa Inc., and Quso® from Philadelphia Quartz Co.

Preferred refined needle or plate shaped clay particles are Attagel®, a refined attapulgus clay product from Engelhard A. G.

The colloidal clay particles formed by suspending naturally occuring clay in water are preferentially used as aqueous suspensions of sedimentary clays, in particular non kaolinitic clays, containing a clay dispersion agent and having a content of solid material about 40% by weight.

The preferred amounts of added hydrophilic silica are 0.5 to 8% by weight, the preferred amounts of added refined needle or plate shaped clay particles are 0.5 to 2.5% by weight and the preferred amounts of colloidal clay particles formed by suspension are 4 to 20% by weight, in all cases calculated as solid material per total solid material.

According to the invention a single or a combination of membres of the group may be added to the pulp as colloidal hydrophilic inorganic particles.

It is believed that the colloidal hydrophilic inorganic particles defined above act as inorganic dispersion agents for the fibres, and it has been found that the two step preparation of the slurry comprising suspending the colloidal hydrophilic inorganic particles (in the following also named "the colloidal dispersion agent") in the water phase of the fibre pulp, i.e. preparing and using an aqueous colloidal solution as water phase in the fibre pulp or stock, in the first step is essential for achieving a satisfactory fibre dispersion in the slurry prepared in the next step.

The order of mixing the components, i.e. water, retention and reinforcing fibres and colloidal hydrophilic inorganic particles, in the pulp prepared in the first step of the preparation of the aqueous slurry is not critical. However, an efficient dispersion of the colloidal particles into the water phase and a thorough mixing of fibres and the aqueous colloidal solution are important.

According to a preferred embodiment of the invention the aqueous pulp of reinforcing and retention fibres containing colloidal hydrophilic inorganic particles suspended in the water phase is prepared as follows: a pulp of retention and reinforcing fibres in water is formed, then the colloidal hydrophilic inorganic particles are added to the pulp and suspended into the water phase by stirring the pulp, and finally additional reinforcing fibre may be admixed into the pulp, if desired. The colloidal hydrophilic inorganic particles may be added to and suspended in the water phase as a dry powder or as an aqueous suspension.

In some cases it may be desirable to improve the dewatering properties of the final aqueous slurry.

According to another aspect of the invention this can be achieved by adding as an additive in the second step in the preparation of the aqueous slurry elongated inorganic particles with a length to diameter ratio larger than 3, preferably larger than 10, and preferably a diameter smaller than 0.1 mm, preferably stonewool fibres or acicular Wollastonite crystals.

By this is obtained considerably improved filtering properties without the loss of strength accompanying addition of flocculants.

Additives added during the second step of the preparation of the aqueous slurry may further comprise e.g. known fillers, colouring agents, setting and curing regulators and water-proofing agents.

When the green shaped articles are formed according to the Magnani technology, the aqueous slurry, having a W/S-ratio equal to about 1, can be used immediately for the further handling in the Magnani machine. Due to a highly improved fibre distribution improved retaining properties of the retention fibres are observed. Further the excellent properties of the slurry with respect of distributing, carrying and supporting the fibres, in particular the reinforcing fibres, manifest themselves by fine surface character and high strength of the end product.

When using the Hatschek technology, the primary aqueous slurry, having a W/S ratio equal to about 2, is diluted approximately 5–10 times with water. Due to the improved dispersion of the fibres in particular of the reinforcing fibres an improved homogeneity of the slurry manifests itself by improved operating characteristics during the web forming process on the sieve cylinder, during the dewatering process and during the take up on the forming roll, resulting in an excellent end product.

The invention is futher illustrated in the Examples:

The materials used in the Examples were as follows:

Hydraulic inorganic binders.

Portland cement: Type I, specific surface (Blaine) about 3300 $cm^2/g$.

L.A. cement: Low alkali portland cement, specific surface (Blaine) about 3000 $cm^2/g$.

E. cement: A special coarse portland cement, specific surface (Blaine) about 2600 $cm^2/g$.

Pozzolanic additives.

Silica dust: Fine filter dust from electro-thermal production of Si, $SiO_2$ content: 80–95%, specific surface: about 25 $m^2/g$, average particle diameter: about 0.1 micron.

Fly ash: Fly ash from power plant, specific surface: about 3500 $cm^2/g$.

Filler.

ASP 400: Hydrous aluminium silicate, flat plates, average particle size: about 5 micron.

Retention fibres.

BO cellulose: Bleached cellulose fibres (Betula) having a degree of freeness about 20 on the Schopper Riegler scale, length: about 1.3 mm, diameter: about 30 micron.

EO cellulose: Bleached cellulose fibres (Myrtaceae) having a degree of freeness about 20 on the Schopper Riegler scale, lenght: about 1.0 mm, diameter: about 20 micron.

Reinforcing fibres.

BO cellulose: Cellulose fibres (Pinus) (Kraft cellulose), length: less than 4 mm, diameter: about 35 micron. These fibres comprise a fine fraction acting as retention fibres.

Abaca: Cellulose fibres (Musa), length: about 6 mm, diameter: about 30 micron.

Cotton: Chopped cellulose fibres (Gossypium), length: about 10 mm, diameter: about 10–20 micron. These fibres comprise a fine fraction acting as retention fibres.

CEMFIL: Bundles of alkali-resistant glass fibres from Fiberglass Ltd., length about 12 mm, filament diameter about 10 micron.

Polypropylene: Fibres prepared as described in Example 10.

Colloidal dispersion agents.

Attagel® 150: A commercial colloidal, acicular attapulgus clay product, specific surface: 210 $m^2/g$.

Aerosil® 200: Commercial alkali stabilized colloidal silica, specific surface 200 $m^2/g$, average particle diameter: 0,012 micron.

Ludox® HS40: Commercial alkali stabilized silica sol, silica content: 40%, specific surface: 220–235 $m^2/g$, average particle diameter 0.014 micron.

Clay slip Rordal and Danmark: Colloidal watery slurries prepared from non refined sedimentary glacial clays, specific surface: 25 $m^2/g$, 40% by weight solid material.

Filtering aids

NYAD® G: Acicular Wollastonite crystals, length: about 22 micron, length to diameter ratio: 5–15.

Stonewool fibres: Commercial stonewool fibres (from Conrock) length: about 0.75 mm, diameter: 5 micron.

Fibre reinforced sheets were prepared in the laboratory in bench scale, on a Magnani machine in full industrial scale, and on a Hatschek machine in full industrial scale:

Bench scale experiments:
Production procedure A.

Pulp preparation: A solution was prepared of 3,4 g $Ca(OH)_2$ and 5.1 g $CaSO_4$, $2H_2O$ in 1700 ml deionized water. The solution was introduced into a British Pulp Evaluation Apparatus. About 80 g retention and reinforcing fibres, apart from polypropylene fibres, were added to the solution, and the mixture was pulped for 15 minutes at 3000 r.p.m. When desired, about 4 g polypropylene fibres were then added, and the resulting mixture pulped for 2.5 minutes.

Slurry preparation: The resulting fibre pulp was transferred to a vessel and a slurry was prepared by adding hydraulic inorganic binder and optionally pozzolanic and other additives to the stirred pulp (285 r.p.m.) in an amount corresponding to 1700 g total solid material. The slurry was stirred for 3 minutes.

Preparation of green sheets: A portion of slurry corresponding to 140 g solid material was pressed to green sheets in a Johns-Manville sheet forming press at 15 $kp/cm^2$ for 60 secondes.

Preparation of hardened sheets: The green sheets were cured to hardened sheets in the following way: The green sheets were placed on a glass plate and kept in a humidity box for 24 hours, relative humidity: about 95%, temperature 25°C. Thereafter the sheets were submerged in water for 6 × 24 hours, temperature: 25°C.

This procedure was used when producing a slurry having a weight ratio water/total solid material equal to about 1, corresponding to the ratio used in the Magnani method. In order to investigate the properties of a Hatschek slurry having a corresponding ratio equal to 10, the following procedure was used:

Production procedure B.

Pulp preparation: A pulp comprising about 20 g fibres in 2000 ml of the above-mentioned solution was prepared as described in production procedure A.

Slurry preparation: The fibre pulp was transferred in into the vessel of a Diaf mixer, and an additional amount of the above-mentioned solution was added to a total volume of water equal to 5000 ml. The resulting mixture was stirred at 4000 r.p.m., and a slurry was prepared by adding hydraulic binder and optionally pozzolanic and other additives to the stirred pulp in an amount corresponding to 500 g total solid material. The slurry was stirred for 6 minutes.

Preparation of green sheets: 1300 ml portions of the slurry were dewatered in a filtering apparatus, suction pressure 200 mm Hg. The resulting filter cakes were pressed to green sheets in a Johns-Manville sheet forming press at 15 kp/cm² for 60 secondes.

Preparation of hardened sheets: As described in production procedure A.

A number of products were prepared according to the invention (type of experiment I) and a number was prepared for comparison (type of experiment C).

When products were prepared according to the invention, the colloidal dispersion agent was added during the pulp preparation phase before the addition of polypropylene fibres, and the pulp was stirred for 2,5 minutes after the addition of colloidal dispersion agent.

The physical properties of the slurry and the hardened sheets were measured and estimated as described below:

Testing procedures:

Filtration time: Slurry preparation according to production procedure A: A portion of slurry corresponding to 180 g of solid material was dewatered in a filtration apparatus at a suction pressure equal to 200 mm Hg. A sudden drop in suction pressure indicates the end of the filtration period. The filtration time is defined as the period of time from start of suction to pressure drop.

Slurry prepared according to procedure B: Same procedure as above, but using 1300 ml of slurry.

Loss of solids: The particle retention properties of the slurry prepared according to production procedure B were measured in the following way. 3 times 440 g portions of slurry were dewatered in a filtration apparatus provided with a 40 mesh sieve, suction pressure: 30 mm Hg. The content of solid material in the filtrate was filtered out from the filtrate and the weight thereof determined. Loss of solids is defined as the percentage by weight of solid material in filtrate compared to total amount of solids.

Character of slurry: The tendency of the fibres to ball and form lumps in the slurry prepared according to production procedure A was estimated manually by rubbing the slurry between the fingers. The properties of the slurry were given the following characters:

"1": Smooth slurry with no lumps.

"2": Small lumps present.

"3": Big lumps present.

BT-max dry and wet, 7 days: The hardened sheets were subjected to bending tests in which the curvature of the specimens was determined as a function of the load. A Zwick 1474 testing machine with 4-point load with a support distance of 190 mm and a 35 mm arm of momentum was used. Force/deformation curves were registered. BT-max designates the maximum tensile stress in bending at maximum load. Subscript "wet" designates that the sheets were taken directly from the hardening phase, "dry" designates that the fresh hardened sheets were dried for 48 hours at 110°C before they were subjected to bending test.

Example 1

Comparison of sheets prepared according to the invention and sheets prepared according to the known art. (Production procedure A.)

7 series of experiments were performed with production of sheets according to production procedure A.

In experiments 1 and 5 sheets were produced without addition of any colloidal dispersion agent.

In experiments 2–4 and 6–7 colloidal dispersion agents were added to the fibre pulp according to the invention as descried above.

Compositions and test results appear from table I.

It is evident that the sheets prepared according to the invention are superior to the sheets prepared for comparison.

The production of the sheets in experiment 5 was extremely difficult due to extreme tendency to fibre balling. Therefore it was necessary to operate at a rather high W/S ratio. These problems were completely absent in experiments 6 and 7.

Example 2

Effect of incorporating Wollastonite crystals.

3 series of experiments were performed with production of sheets according to production procedure A including addition of NYAD G to the slurry.

Compositions and test results appear from table II.

Comparison between the results of experiments 2 and 8, 3 and 9, and 4 and 10 shows that incorporating NYAD G provides reduced time of filtration and improved strength. Preferred values for the filtration time are 10–50 seconds. Values below 15 seconds indicate too rapid dewatering due to formation of a porous structure in the matrix, leading to weak hardened sheets. Values above 50 seconds are not desirable – because they lead to reduced production capacity.

## Example 3

Effect of adding colloidal dispersion agent to the fibre pulp compared to adding some material to the slurry.

Six series of experiments were carried out with production of sheets according to production procedure A.

In three series (example 11, 13 and 15) the colloidal dispersion agent was added to the fibre pulp, i.e. according to the invention. In the other three series (example 12, 14 and 16) the colloidal dispersion agent was not added according to the invention, i.e. not to the fibre pulp, but to the slurry.

Compositions and test results appear from table III.

It is evident that the order of mixing the components is essential for obtaining a superior product.

## Example 4

Production of sheets according to the invention.

12 series of experiments were performed, with production of sheets according to production procedure A with different combinations of colloidal dispersion agent added to the fibre pulp. Experiments 29–32 show the effect of not including any colloidal dispersion agent.

Compositions and test results appear from Table IV.

The superiority of the sheets prepared according to the invention is evident.

## Example 5

Effect of addition of a flocculating agent.

It was shown in example 2 that the incorporation of Wollastonite crystals resulted in improved strength and reduced filtration times.

Reducing filtration time by addition of flocculating agents, such as cationic polyelectrolytes, belongs to the known art. The effect of addition of flocculation agents was investigated in the following way.

Two series of experiments were performed with production of sheets according to production procedure A. In both series 20% by weight (on dry basis) clay slip Rørdal was added to the fibre pulp according to the invention, but in experiment 34 0.025% by weight of a strongly cationic polyacrylamide polyelectrolyte "X 1" from Floerger S.A. was added to the slurry as flocculating agent.

Compositions and test results appear from table V.

The addition of flocculating agent resulted in a reduced filtration time but also in reduced strength. Addition of Wollastonite crystals results in reduced filtration time and improved strength.

## Example 6

Effect of addition of fine silica dust.

Addition of fine silica dust i.e. silica dust as defined above, to the slurry belongs to the known art. The essential difference between silica dust and the colloidal hydrophilic inorganic particles according to the invention was illustrated through the following experiments with production of sheets according to production procedure A.

In the first experiment, experiment No. 35, 2 weight % silica dust was mixed into the fibre pulp, in the third experiment, No. 37, 2 weight % Attagel 150 was mixed into the fibre pulp, and 2 weight % silica dust was added to the slurry, and in the fourth experiment, No. 38, neither silica dust nor Attagel 150 was added, neither to pulp nor slurry.

Compositions and test results appear from table VI.

The results demonstrate that addition of silica dust to the pulp does not prevent lump formation in the slurry as Attagel 150 does. Comparison between experiments 35 and 38 shows a minor increase of BT-max, dry by addition of silica dust, which may be explained by the excellent pozzolanic activity of the silica dust.

It is obvious that the products prepared according to the invention are superior with respect to strength properties. Also the surface character of the products prepared according to the invention is better, because the sheets prepared in experiments 36 and 37 have a smooth surface, wherease the surface of the sheets prepared in experiments 35 and 38 exhibit protruding fibres.

The sheet prepared in experiment 36 is preferred to the sheet prepared in experiment 37 because addition of a small amount of silica dust, even less than 1% by weight, causes an undesirable dark colouring of the sheets.

## Example 7

Comparison of sheets prepared according to the invention and sheets prepared according to the known art (production procedure B).

12 series of experiments were performed with production of sheets according to production procedure B.

The BO cellulose fibres were refined to a degree of freeness about 58 on the Schopper Riegler scale after pulping.

In three experiments (experiment 39, 45 and 49) sheets were produced without addition of any colloidal dispersion agents.

In other experiments colloidal dispersion agent was added to the fibre pulp as described above. Experiments 44 and 48 illustrate the effect of adding NYAD G and stonewool fibres to the slurry.

Compositions and test results appear from table VII.

The results demonstrate that a significant increase of the strength of the sheets is achieved by the addition of colloidal dispersion agent to the fibre pulp.

A filtration time below 300 seconds is preferred, and a loss of solids about 10% is acceptable by the mentioned production procedure.

Experiments 47–48 show the efficiency of NYAD G as filtration aid.

## Example 8

Experiments on a full scale Magnani machine.

146 kg AO cellulose and 122 kg BO cellulose were pulped with 6500 litres of water for 40 minutes in a 12 m³ Black Clawson pulper. Thereafter 24 kg of polypropylene fibres were added, and the pulp was pulped for 5 minutes. Then 122 kg Attagel 150 was added, and the mixture was pulped for 10 minutes. Finally, an amount of clay slip Rørdal corresponding to 974 kg dry material was added and the pulp was pulped for 5 minutes.

The pulp was transferred to a 4 m³ F.L. Smidth mixer and portland cement, NYAD G and Wollastonite FW 200 (Wollastonite particles with average length about 20 micron, length to diameter ratio about 3, from Pargas Kalk AB) was added in amounts corresponding to 80 kg portland cement, 10.2 kg NYAD G and 6.8 kg Wollastonite FW 200 per 107 kg pulp. The resulting slurry was stirred for 15 minutes. Then the slurry was pumped into a Magnani machine where it was dewatered to corrugated boards.

The boards were stacked and conveyed through a curing channel where they were cured by the heat developed by the hydration of the cement. The residence time in the curing channel was about 7 hours. After about 4 hours a temperature of 100°C was reached. The cured boards were removed from the forms and stored at 25°C for 7 days.

Testing.

The BT-max of the boards was measured essentially as described above, but with 3-point load.

BT-max l (with rupture parallel to the corrugations) 8.1 MPa.

BT-max t (with rupture perpendicular to the corrugations) 9.3 MPa. Density: 1.45 g per cm³.

## Example 9

Experiments on a full scale Hatschek machine. Experiment H1.

86 kg abaca cellulose was pulped for 30 minutes with 2500 litres of water in a 3 m³ Solvo pulper. 138 kg BO cellulose was pulped for 10 minutes with 4000 litres of water in a 7 m³ Solvo pulper. The resulting BO cellulose pulp was refined to 50 degrees of fineness on the Schopper Riegler scale. The two pulps were transferred to a 7 m³ Solvo pulper and 68 kg Attagel 150 was mixed into the pulp. Mixing time: 5 minutes. Then an amount of clay slip Rørdal corresponding to 512 kg solid material, 171 kg stonewool fibres and 17 kg polypropylene fibres were added, and the mixture was mixed for 10 minutes.

3383 kg of the resulting pulp was mixed with 994 kg E. cement to a primary Hatschek slurry with a W/S ratio, i.e. a ratio water to total solid material, equal to about 2.1.

The primary slurry was diluted with water to a W/S ratio equal to about 10, and processed into plane boards by known methods in a Hatschek machine. The boards were pressed at 125 kg/cm² for 20 minutes, and the pressed boards were cured and stored for 28 days as described in example 8.

Testing.

Two values of BT-max of the boards was measured as described in connection with the bench scale experiments.

BT-max l (with rupture parallel to the direction of the permeable belt).

BT-max t (with rupture perpendicular to the direction of the permeable belt).

Composition and test results appear from table VIII.

Experiments H2–H5.

Four other types of boards were produced as described above.

Compositions and test results appear from table VIII.

## Example 10

Preparation of the polypropylene fibres used in Examples 1–9.

The fibres were prepared in the following manner:

The polypropylene used was GWE 23 from ICI with melt index of 3 g/10 minutes measured according to DIN MFI 230/2.16.

In a standard extrusion/stretch plant, the polypropylene was extruded into a blown tubular film at an extruder temperature of 180–220°C, and the tubular film was cooled with cooling air at 18–20°C and cut into two film bands.

From the drawing station following the extruder, the film was passed through a hot air oven with an air temperature of 180°C and an air velocity of 25 m/second. By using a higher roller speed in the stretch station following the hot air oven, the film was stretched in a ratio of 1:17. Thereafter, the film was heat-stabilized by passing a hot air oven with an air temperature of 180°C and an air velocity of 25 m/second, the film velocity being about 90 m/second.

The thickness of the film was then 20 micron.

The film was fibrillated to form fibres of from 2 to 30 dtex by means of a Reifenhäuser Fl-S0800-03-01 fibrillator with 13 needles per cm in each of two consecutive staggered needle rows placed with the same distance as the interval between two needles. The fibrillation ratio (= the ratio between the film advancing velocity and the circumferential velocity of the fibrillator roll) was 1:3. Thereafter, 1% by weight of hydrophilic avivage (Henkel LW 421) was applied as an 1:9 aqueous slurry, and the fibres were cut in lengths of 12 mm in a staple cutter.

Table I

| Experiment No. | 1 | 2 | 3 | 4 | 5 | 6 | 7 |
| --- | --- | --- | --- | --- | --- | --- | --- |
| (% by weight, dry basis) | | | | | | | |
| Portland cement | | | | | | | |
| L.A. cement | | | | | | | |
| E. cement | 97.75 | 95.75 | 95.75 | 95.75 | 94.5 | 74.5 | 90.75 |
| Silica dust | | | | | | | |
| Fly ash | | | | | | | |
| BO cellulose | | | | | | | |
| EO cellulose | | | | | | | |
| AO cellulose | 2.0 | 2.0 | 2.0 | 2.0 | 5.0 | 5.0 | 5.0 |
| Abaca | | | | | | | |
| Cotton | | | | | | | |
| Polypropylene | 0.25 | 0.25 | 0.25 | 0.25 | 0.25 | 0.25 | 0.25 |
| Attagel 150 | | | | 2.0 | | | 4.0 |
| Aerosil 200 | | 2.0 | | | | | |
| Ludox HS 40 | | | 2.0 | | | | |
| Clay slip Rørdal | | | | | | | |
| Clay slip Danmark | | | | | | 20 | |
| NYAD G | | | | | | | |
| Stonewool fibres | | | | | | | |
| Type of experiment | C | I | I | I | C | I | I |
| W/S in slurry (x) | 1.0 | 1.0 | 1.0 | 1.0 | 1.3 | 1.05 | 1.3 |
| Filtration time (sec.) | 17 | 100 | 61 | 31 | 9 | 57 | 28 |
| Density, g/cm$_3$ | 1.65 | 1.74 | 1.75 | 1.72 | 1.42 | 1.63 | 1.52 |
| BT-max wet, 7 days, MPa | 7.3 | 8.6 | 8.3 | 9.4 | 6.6 | 13.2 | 10.7 |
| BT-max dry, 7 days, MPa | (y) | (y) | (y) | (y) | 8.8 | 15.1 | 11.3 |
| Character of slurry | 3 | 1 | 1 | 1 | 3 | 1 | 1 |

(x) weight ratio water/total solid material
(y) not measured

Table II

| Experiment No. | 8 | 9 | 10 |
| --- | --- | --- | --- |
| (% by weight, dry basis) | | | |
| Portland cement | | | |
| L.A. cement | | | |
| E. cement | 83.75 | 83.75 | 83.75 |
| Silica dust | | | |
| Fly ash | | | |
| BO cellulose | | | |
| EO cellulose | | | |
| AO cellulose | 2.0 | 2.0 | 2.0 |
| Abaca | | | |
| Cotton | | | |
| Polypropylene | 0.25 | 0.25 | 0.25 |
| Attagel 150 | | | 2.0 |
| Aerosil 200 | 2.0 | | |
| Ludox HS 40 | | 2.0 | |
| Clay slip Rørdal | | | |
| Clay slip Danmark | | | |
| NYAD G | 12.0 | 12.0 | 12.0 |
| Stonewool fibres | | | |
| Type of experiment | I | I | I |

### Table II

| Experiment No. | 8 | 9 | 10 |
|---|---|---|---|
| | (% by weight, dry basis) | | |
| W/S in slurry (x) | 1.0 | 1.0 | 1.0 |
| Filtration time (sec.) | 29 | 30 | 15 |
| Density, g/cm³ | 1.54 | 1.61 | 1.65 |
| BT-max wet, 7 days, MPa | 10.6 | 10.9 | 10.6 |
| BT-max dry, 7 days, MPa | | | |
| Character of slurry | 1 | 1 | 1 |

(x) weight ratio water/total solid material

### Table III

| Experiment No. | 11 | 12 | 13 | 14 | 15 | 16 |
|---|---|---|---|---|---|---|
| | (% by weight, dry basis) | | | | | |
| Portland cement | | | | | | |
| L.A. cement | | | | | | |
| E. cement | 87.25 | 87.25 | 73.75 | 73.75 | 92.5 | 92.5 |
| Silica dust | | | | | | |
| Fly ash | | | | | | |
| BO cellulose | 1.5 | 1.5 | | | 0.5 | 1.5 |
| EO cellulose | | | | | | |
| AO cellulose | 2.0 | 2.0 | 2.0 | 2.0 | | |
| Abaca | | | | | | |
| Cotton | | | | | | |
| Polypropylene | 0.25 | 0.25 | 0.25 | 0.25 | 3.0 | 3.0 |
| Attagel 150 | 2.0 | 2.0 | | | | |
| Aerosil 200 | | | | | 3.0 | 3.0 |
| Ludox HS 40 | | | | | | |
| Clay slip Rørdal | 7.0 | 7.0 | | | | |
| Clay slip Danmark | | | 12 | 12 | | |
| NYAD G | | | 12 | 12 | | |
| Stonewool fibres | | | | | | |
| Type of experiment | I | C | I | C | I | C |
| W/S in slurry (x) | 1.0 | 1.0 | 0.85 | 0.85 | 0.9 | 0.9 |
| Filtration time (sec.) | 48 | 29 | 49 | 20 | 45 | 18 |
| Density, g/cm³ | 1.58 | 1.48 | 1.66 | 1.53 | 1.62 | 1.36 |
| BT-max wet, 7 days, MPa | 10.4 | 6.6 | 12.4 | 6.2 | 12.8 | 5.8 |
| BT-max dry, 7 days, MPa | | | | | | |
| Character of slurry | 1 | 3 | 1 | 3 | 1 | 3 |

(x) weight ratio water/total solid material

### Table IV

| Experiment No. | 17 | 18 | 19 | 20 | 21 | 22 |
|---|---|---|---|---|---|---|
| | (% by weight, dry basis) | | | | | |
| Portland cement | | | | | | |
| L.A. cement | | | | 70.25 | 85.5 | 84.5 |
| E. cement | 77.5 | 89.75 | 83.5 | | | |
| Silica dust | | | | | | |
| Fly ash | | | | | | |
| BO cellulose | | 1.50 | 1.50 | | | |
| EO cellulose | | | | | 1.5 | 1.5 |
| AO cellulose | 2.0 | 1.5 | 1.5 | | | |
| Abaca | | | | | | |
| Cotton | | | | 6.0 | | |
| Polypropylene | 0.25 | 0.25 | 0.25 | 0.25 | 3.0 | 4.0 |
| Attagel 150 | | 1.25 | 1.25 | 3.5 | | |
| Aerosil 200 | | | | | | |
| Ludox HS 40 | | | | | | |
| Clay slip Rørdal | | | | 20.0 | 10.0 | 10.0 |
| Clay slip Danmark | 8.0 | 6.0 | 6.0 | | | |
| NYAD G | 12.0 | | 6.0 | | | |
| Stonewool fibres | | | | | | |
| Type of experiment | I | I | I | I | I | I |
| W/S in slurry (x) | 0.88 | 1.0 | 1.0 | 1.5 | 0.9 | 0.9 |
| Filtration time (sec.) | 18 | 68 | 32 | 86 | 88 | 68 |
| Density, g/cm³ | 1.64 | 1.66 | 1.69 | 1.49 | 1.54 | 1.48 |
| BT-max wet, 7 days, MPa | 13.2 | 9.6 | 11.7 | 10.5 | 10.6 | 10.7 |
| BT-max dry, 7 days, MPa | 14.8 | (y) | 15.4 | 16.5 | 13.6 | 15.1 |
| Character of slurry | 1 | 1 | 1 | 1 | 1 | 1 |

(x) weight ratio water/total solid material
(y) not measured

### Table IV (continued)

| Experiment No. | 23 | 24 | 25 | 26 | 27 | 28 |
|---|---|---|---|---|---|---|
| | (% by weight, dry basis) | | | | | |
| Portland cement | 82.5 | | | | | |
| L.A. cement | | 84.25 | 72.25 | 84.5 | | 77.5 |
| E. cement | | | | | 77.75 | |
| Silica dust | | | 12.0 | 5.0 | | 5.0 |
| Fly ash | | | | | | |
| BO cellulose | | | | | | |
| EO cellulose | 1.0 | 1.5 | 2.5 | 1.5 | | 1.5 |
| AO cellulose | 1.0 | | | 1.0 | 3.0 | |

## Table IV (continued)

| Experiment No. | 23 | 24 | 25 | 26 | 27 | 28 |
|---|---|---|---|---|---|---|
| | (% by weight, dry basis) | | | | | |
| Abaca | | | | | | |
| Cotton | 1.0 | | | | | |
| Cemfil | | | | | | 5.0 |
| Polypropylene | 0.25 | 3.0 | 3.0 | 3.0 | 0.25 | |
| Attagel 150 | 1.25 | 1.25 | 1.25 | | 2.0 | 1.0 |
| Aerosil 200 | | | | | | |
| Ludox HS 40 | | | | | | |
| Clay slip Rørdal | 7.0 | 10.0 | 10.0 | 10.0 | 5.0 | 10.0 |
| Clay slip Danmark | | | | | | |
| NYAD G | 6.0 | | | | 12.0 | |
| Stonewool fibres | | | | | | |
| Type of experiment | I | I | I | I | I | I |
| W/S in slurry (x) | 1.0 | 1.0 | 1.0 | 0.9 | 1.0 | 0.8 |
| Filtration time (sec.) | 33 | 70 | 285 | 60 | 15 | 110 |
| Density, g/cm³ | 1.65 | 1.62 | 1.63 | 1.49 | 1.56 | 1.77 |
| BT-max wet, 7 days, MPa | 12.3 | 13.2 | 15.4 | 10.2 | 11.4 | 16.7 |
| BT-max dry, 7 days, MPa | 13.3 | 17.2 | 17.5 | 12.6 | 11.6 | 17.8 |
| Character of slurry | 1 | 1 | 1 | 1 | 1 | 1 |

(x) weight ratio water/total solid material

## Table IV (continued)

| Experiment No. | 29 | 30 | 31 | 32 |
|---|---|---|---|---|
| | (% by weight, dry basis) | | | |
| Portland cement | | | | |
| L.A. cement | | | | |
| E. cement | 74.75 | 94.75 | 94.75 | 97.0 |
| Silica dust | | | | |
| ASP 400 | 10.0 | | | |
| Fly ash | | | | |
| BO cellulose | | | 4.5 | 1.25 |
| EO cellulose | 1.5 | 4.5 | | |
| AO cellulose | 1.5 | 0.5 | 0.5 | 1.5 |
| Abaca | | | | |
| Cotton | | | | |
| Polypropylene | 0.25 | 0.25 | 0.25 | 0.25 |
| Attagel 150 | | | | |
| Aerosil 200 | | | | |
| Ludox HS 40 | | | | |
| Clay slip Rørdal | | | | |
| Clay slip Danmark | | | | |
| NYAD G | 12.0 | | | |
| Stonewool fibres | | | | |

## Table IV (continued)

| Experiment No. | 29 | 30 | 31 | 32 |
|---|---|---|---|---|
| | (% by weight, dry basis) | | | |
| Type of experiment | C | C | C | C |
| W/S in slurry (x) | 0.9 | 1.2 | 1.2 | 1.0 |
| Filtration time (sec.) | 8 | 6 | 5 | 7 |
| Density, g/cm³ | 1.52 | 1.45 | 1.45 | 1.58 |
| BT-max wet, 7 days, MPa | 7.2 | 5.8 | 4.9 | 5.4 |
| BT-max dry, 7 days, MPa | 8.5 | 8.4 | 7.1 | 7.6 |
| Character of slurry | 3 | 3 | 3 | 3 |

(x) weight ratio water/total solid material

## Table V

| Experiment No. | 33 | 34 |
|---|---|---|
| | (% by weight, dry basis) | |
| Portland cement | | |
| L.A. cement | | |
| E. cement | 74.75 | 74.75 |
| Silica dust | | |
| Fly ash | | |
| BO cellulose | | |
| EO cellulose | | |
| AO cellulose | 5.0 | 5.0 |
| Abaca | | |
| Cotton | | |
| Polypropylene | 0.25 | 0.25 |
| Attagel 150 | | |
| Aerosil 200 | | |
| Ludox HS 40 | | |
| Clay slip Rørdal | 20.0 | 20.0 |
| Clay slip Danmark | | |
| NYAD G | | |
| Cationic polyelectrolyte «X 1» | – | 0.025 |
| Type of experiment | I | I |
| W/S in slurry (x) | 1.2 | 1.2 |
| Filtration time (sec.) | 49 | 28 |
| Density, g/cm³ | 1.63 | 1.57 |
| BT-max wet, 7 days, MPa | 10.2 | 7.6 |
| BT-max dry, 7 days, MPa | | |
| Character of slurry | 1 | 2 |

(x) weight ratio water/total solid material

Table VI

| Experiment No. | 35 | 36 | 37 | 38 |
|---|---|---|---|---|
| (% by weight, dry basis) | | | | |
| Portland cement | | | | |
| L.A. cement | | | | |
| E. cement | 94.25 | 94.25 | 92.25 | 96.25 |
| Silica dust | 2.0 | | 2.0 | |
| Fly ash | | | | |
| BO cellulose | 1.5 | 1.5 | 1.5 | 1.5 |
| EO cellulose | | | | |
| AO cellulose | 2.0 | 2.0 | 2.0 | 2.0 |
| Abaca | | | | |
| Cotton | | | | |
| Cemfil | | | | |
| Polypropylene | 0.25 | 0.25 | 0.25 | 0.25 |
| Attagel 150 | | 2.0 | 2.0 | |
| Aerosil 200 | | | | |
| Ludox HS 40 | | | | |
| Clay slip Rørdal | | | | |
| Clay slip Danmark | | | | |
| NYAD G | | | | |
| Stonewool fibres | | | | |
| Type of experiment | C | I | I | C |
| W/S in slurry (x) | 1.0 | 1.0 | 1.0 | 1.0 |
| Filtration time (sec.) | 17 | 25 | 23 | 9 |
| Density, g/cm³ | 1.52 | 1.64 | 1.63 | 1.46 |
| BT-max wet, 7 days, MPa | 7.2 | 9.0 | 9.0 | 6.9 |
| BT-max dry, 7 days, MPa | | | | |
| Character of slurry | 3 | 1 | 1 | 3 |

(x) weight ratio water/total solid material

Table VII

| Experiment No. | 39 | 40 | 41 | 42 | 43 | 44 |
|---|---|---|---|---|---|---|
| (% by weight, dry basis) | | | | | | |
| Portland cement | | | | | | |
| L.A. cement | | | | | | |
| E. cement | 94.5 | 92.5 | 78.5 | 79.5 | 78.0 | 71.0 |
| Silica dust | | | | | | |
| Fly ash | | | | | | |
| BO cellulose | 4.5 | 4.5 | 4.5 | 4.5 | 4.0 | 4.0 |
| EO cellulose | | | | | | |
| AO cellulose | 0.5 | 0.5 | 0.5 | 0.5 | | |
| Abaca | | | | | 2.5 | 2.5 |
| Cotton | | | | | | |
| Polypropylene | 0.5 | 0.5 | 0.5 | 0.5 | 0.5 | 0.5 |
| Attagel 150 | | 2.0 | | | | 2.0 |
| Aerosil 200 | | | | | | |
| Ludox HS 40 | | | 1.0 | | | |
| Clay slip Rørdal | | | 15.0 | 15.0 | 15.0 | 15.0 |
| Clay slip Danmark | | | | | | |
| NYAD G | | | | | | |
| Stonewool fibres | | | | | | 5.0 |
| Type of experiment | C | I | I | I | I | I |
| W/S in slurry (x) | 10 | 10 | 10 | 10 | 10 | 10 |
| Filtration time (sec.) | 46 | 64 | 441 | 331 | 146 | 145 |
| Loss of solids (%) (xx) | 6.5 | 7.6 | 6.8 | 7.0 | 6.9 | 4.8 |
| Density, g/cm³ | 1.42 | 1.44 | 1.57 | 1.55 | 1.48 | 1.36 |
| BT-max wet, 7 days, MPa | 5.4 | 7.0 | 11.5 | 10.7 | 11.2 | 9.5 |

(x) weight ratio water/total solid material
(xx) by weight

Table VII (continued)

| Experiment No. | 45 | 46 | 47 | 48 | 49 | 50 |
|---|---|---|---|---|---|---|
| (% by weight, dry basis) | | | | | | |
| Portland cement | | | | | | |
| L.A. cement | | | | | | |
| E. cement | 96.0 | 94 | 86 | 76 | 84.5 | 69.5 |
| Silica dust | | | | | | |
| Fly ash | | | | | 10 | 10 |
| BO cellulose | 3.0 | 3.0 | 3.0 | 3.0 | 4.5 | 4.5 |
| EO cellulose | | | | | | |
| AO cellulose | 0.5 | 0.5 | 0.5 | 0.5 | 0.5 | 0.5 |
| Abaca | | | | | | |
| Cotton | | | | | | |
| Polypropylene | 0.5 | 0.5 | 0.5 | 0.5 | 0.5 | 0.5 |
| Attagel 150 | | 2 | 2 | 2 | | |
| Aerosil 200 | | | | | | |
| Ludox HS 40 | | | | | | |
| Clay slip Rørdal | | | 8 | 8 | | |
| Clay slip Danmark | | | | | | 15 |
| NYAD G | | | | 10 | | |
| Stonewool fibres | | | | | | |
| Type of experiment | C | I | I | I | C | I |
| W/S in slurry (x) | 10 | 10 | 10 | 10 | 10 | 10 |
| Filtration time (sec.) | 60 | 93 | 353 | 189 | 48 | 371 |

## Table VII (continued)

| Experiment No. | 45 | 46 | 47 | 48 | 49 | 50 |
|---|---|---|---|---|---|---|
| (% by weight, dry basis) | | | | | | |
| Loss of solids (%) (xx) | 9.1 | 10.4 | 11.2 | 8.3 | 5.3 | 8.7 |
| Density, g/cm³ | 1.48 | 1.52 | 1.60 | 1.50 | 1.34 | 1.52 |
| BT-max wet, 7 days, MPa | 5.5 | 7.4 | 8.7 | 8.0 | 3.8 | 9.5 |

(x) weight ratio water/total solid material
(xx) by weight

## Table VIII

| Experiment No. | H1 | H2 | H3 | H4 | H5 |
|---|---|---|---|---|---|
| (% by weight, dry basis) | | | | | |
| Portland cement | | | | | |
| L.A. cement | | | | | |
| E. cement | 71 | 86 | 76 | 79.5 | 69.5 |
| Silica dust | | | | | |
| Fly ash | | | | | |
| BO cellulose SR 50 | 4 | 4 | 4 | 4.5 | 4.5 |
| EO cellulose | | | | | |
| AO cellulose | | | | 0.5 | 0.5 |
| Abaca | 2.5 | 2.5 | 2.5 | | |
| Cotton | | | | | |
| Polypropylene | 0.5 | 0.5 | 0.5 | 0.5 | 0.5 |
| Attagel 150 | 2 | 2 | 2 | | |
| Aerosil 200 | | | | | |
| Ludox HS 40 | | | | | |
| Clay slip Rørdal | 15 | | 15 | 15 | 15 |
| Clay slip Danmark | | | | | |
| NYAD G | | | | | 10 |
| Stonewool fibres | 5 | 5 | | | |
| Type of experiment | I | I | I | I | I |
| Density, g/cm³ | 1.63 | 1.63 | 1.46 | 1.49 | 1.70 |
| BT-max l, 28 days, MPa | 19.2 | 14.2 | 11.0 | 12.6 | 15.1 |
| BT-max t, 28 days, MPa | 26.2 | 18.8 | 17.1 | 19.0 | 18.2 |

## Claims

1. A process for the manufacture of fibre reinforced shaped articles with a matrix of cured inorganic binder comprising the steps of preparing an aqueous slurry of reinforcing fibres, retention fibres, hydraulic inorganic binder particles and possibly other additives and containing an excess of water in relation to the amount necessary to secure hydration of the inorganic binder, forming green shaped articles by dewatering the slurry, and curing the green shaped articles, characterized in that the preparation of the aqueous slurry comprises the steps of initially preparing an aqueous pulp of asbestosfree reinforcing and retention fibres containing colloidal hydrophilic inorganic particles suspended in the water phase, and subsequently forming the aqueous slurry by suspending the hydraulic inorganic binder particles and possibly other additives in said aqueous pulp, additional water being added, if desired.

2. A process according to Claim 1, characterized in that the colloidal hydrophilic inorganic particles are selected from the group comprising:

1) hydrophilic silica particles with a specific surface above 100 m²/g and a average particle diameter about 0.012 micron.
2) refined needle or plate shaped clay particles with a specific surface above 75 m²/g and thickness about 0.012 micron.
3) colloidal clay particles formed by suspending naturally occurring, preferentially sedimentary, clay in water, preferably in the presence of a clay dispersion agent, with a specific surface above 25 m²/g.

3. A process according to Claim 1 or Claim 2, characterized in that the reinforcing fibres are selected from the group comprising cellulose, polyamide, polyester and polypropylene fibres and added in an amount corresponding to 0.2–8% by weight of solids in the aqueous slurry.

4. A process according to any of Claims 1 to 3, characterized in that the reinforcing fibres comprise fibrillated polypropylene fibres having a tensile strength of a least 4000 kp/cm³ and an elongation at rupture of a most 8%, chopped to a length of about 12 mm.

5. A process according to any of Claims 1 to 4, characterized in that the retention fibres are selected from the group comprising refined cellulose fibres, in particular cellulose fibres refined to a fineness of 20–60 degrees on the Schopper Riegler scale, and highly fibrillated polyethylene and polypropylene fibres, and added in an amount corresponding to 0.2–8% by weight of solids in the aqueous slurry.

6. A process according to any of Claims 1 to 5, characterized in that the first step in the preparation of the aqueous slurry comprises preparation of an aqueous pulp of retention and reinforcing fibres, followed by addition of colloidal hydrophilic inorganic particles to the pulp, mixing and suspending the particles into the water phase, if desired followed by addition of additional reinforcing fibres and further mixing.

7. A process according to any of Claims 1 to 6, characterized in that the colloidal hydrophilic inorganic particles are added to and suspended in the water phase of the pulp as an aqueous suspension.

8. A process according to any of Claims 1 to 7, characterized in that the second step in the preparation of the aqueous slurry comprises admixing elongated inorganic particles with a length to diameter ratio larger than 3, preferably larger than 10, and a diameter smaller than 0.1 mm, preferably stonewool fibres or acicular Wollastonite crystals.

## Patentansprüche

1. Verfahren zum Herstellen faserverstärkter Formteile mit einer Matrix eines gehärteten anorganischen Binders mit den Schritten des Zubereitens einer wässrigen Aufschlämmung aus Verstärkungsfasern, Retentionsfasern, hydraulischen, anorganischen Binderpartikeln und möglichen anderen Zusätzen und mit einem Wasserüberschuss in Hinblick auf die zur Gewährleistung der Hydratisierung des anorganischen Binders benötigten Menge, des Formens frischer Formteile durch Entwässerung der Aufschlämmung und des Härtens der frischen Formteile, dadurch gekennzeichnet, dass die Zubereitung der wässrigen Aufschlämmung die Schritte des anfänglichen Zubereitens einer wässrigen Pulpe aus asbestfreien Verstärkungs- und Retentionsfasern mit kolloidalen, hydrophilen, anorganischen Partikeln suspendiert in der Wasserphase und des nachfolgenden Bildens der wässrigen Aufschlämmung durch Suspendieren der hydraulischen, anorganischen Binderpartikel und möglicherweise anderer Zusätze in der wässrigen Pulpe umfasst, wobei sofern gewünscht zusätzliches Wasser zugegeben wird.

2. Verfahren nach Anspruch 1, dadurch gekennzeichnet, dass die kolloidalen, hydrophilen, anorganischen Partikel ausgewählt sind aus der Gruppe umfassend 1) hydrophile Silicapartikel mit einer spezifischen Oberfläche grösser 100 m²/g und einem durchschnittlichen Partikeldurchmesser von etwa 0,012 µm,
2) raffinierte nadel- oder plattenförmige Tonpartikel mit einer spezifischen Oberfläche grösser 75 m²/g und einer Dicke von etwa 0,012 µm,
3) kolloidale Tonpartikel gebildet durch Suspendieren natürlich auftretenden, vorzugsweise sedimentären Tons in Wasser, vorzugsweise in Anwesenheit eines Tondispersionsmittels, mit einer spezifischen Oberfläche grösser 25 m²/g.

3. Verfahren nach Anspruch 1 oder Anspruch 2, dadurch gekennzeichnet, dass die Verstärkungsfasern ausgewählt sind aus der Gruppe umfassend Cellulose-, Polyamid-, Polyester- und Polypropylenfasern und zugegeben werden in einer Menge entsprechend 0,2 bis 8 Gew.-% der Feststoffe in der wässrigen Aufschlämmung.

4. Verfahren nach einem der Ansprüche 1 bis 3, dadurch gekennzeichnet, dass die Verstärkungsfasern fibrillierte Polypropylenfasern mit einer Zugfestigkeit von mindestens 4000 kp/cm² und einer Bruchdehnung von mindestens 8%, zerschnitten auf eine Länge von etwa 12 mm, umfassen.

5. Verfahren nach einem der Ansprüche 1 bis 4, dadurch gekennzeichnet, dass die Retentionsfasern ausgewählt sind aus der Gruppe umfassend raffinierte Cellulosefasern, insbesondere Cellulosefasern raffiniert auf eine Feinheit von 20 bis 60 Grad auf der Schopper-Riegel-Skala, und im hohen Masse fibrillierte Polyethylen- und Polypropylenfasern und zugegeben werden in einer Menge entsprechend 0,2 bis 8 Gew.-% der Feststoffe in der wässrigen Aufschlämmung.

6. Verfahren nach einem der Ansprüche 1 bis 5, dadurch gekennzeichnet, dass der erste Schritt bei der Zubereitung der wässrigen Aufschlämmung umfasst die Zubereitung einer wässrigen Pulpe aus Retentions- und Verstärkungsfasern gefolgt von der Zugabe kolloidaler, hydrophiler, anorganischer Partikel zur Pulpe, das Einmischen und Suspendieren der Partikel in die Wasserphase, sofern gewünscht gefolgt von der Zugabe zusätzlicher Verstärkungsfasern und weiterem Mischen.

7. Verfahren nach einem der Ansprüche 1 bis 6, dadurch gekennzeichnet, dass die kolloidalen, hydrophilen, anorganischen Partikel als eine wässrige Suspension zugegeben und suspendiert werden in der Wasserphase der Pulpe.

8. Verfahren nach einem der Ansprüche 1 bis 7, dadurch gekennzeichnet, dass der zweite Schritt bei der Zubereitung der wässrigen Aufschlämmung umfasst das Zumischen länglicher, anorganischer Partikel mit einem Verhältnis zwischen Länge und Durchmesser grösser als 3, vorzugsweise grösser als 10, und einem Durchmesser kleiner als 0,1 mm, vorzugsweise Steinwollfasern oder nadelförmigen Wollastonitkristallen.

## Revendications

1. Procédé de fabrication d'articles façonnés à armature de fibres comportant une matrice de liant minéral durci, procédé comportant les étapes consistant à: préparer une suspension aqueuse de fibres d'armature, de fibres de rétention, de particules du liant minéral hydraulique et éventuellement d'autres additifs et contenant un excès d'eau par rapport à la quantité nécessaire pour assurer l'hydratation du liant minéral, former des articles façonnés verts par élimination de l'eau de la suspension, et à faire durcir les articles façonnés verts, et étant caractérisé en ce que la préparation de la suspension aqueuse comprend les étapes consistant à préparer initialement une pâte aqueuse de fibres d'armature et de rétention sans amiante et contenant des particules minérales hydrophiles colloïdales en suspension dans la phase aqueuse, et à former ensuite la suspension aqueuse en mettant les particules du liant minéral hydraulique et éventuellement d'autres additifs en suspension dans ladite pâte aqueuse, en ajoutant un supplément d'eau, si on le désire.

2. Procédé selon la revendication 1, caractérisé en ce que les particules minérales hydrophiles colloïdales sont choisies dans l'ensemble comprenant:

1) des particules de silice hydrophile ayant une surface spécifique supérieure à 100 m²/g et ayant un diamètre particulaire moyen d'environ 0,012 micron,
2) des particules d'argile raffinée, en forme d'aiguilles ou de plaques, ayant une surface spécifique supérieure à 75 m²/g et une épaisseur d'environ 0,012 micron,
3) des particules d'argile colloïdale formées par la mise en suspension d'une argile naturelle, de préférence sédimentaire, dans de l'eau, de préférence en présence d'un agent de dispersion de l'argile, et ayant une surface spécifique supérieure à 25 m²/g.

3. Procédé selon la revendication 1 ou la revendication 2, caractérisé en ce que les fibres d'armature sont choisies dans une ensemble comprenant des fibres de cellulose, de polyamide, de polyester et de polypropylène, et en ce qu'elles sont ajoutées en une quantité correspondant à 0,2 à 8% en poids de solides dans la suspension aqueuse.

4. Procédé selon l'une quelconque des revendications 1 à 3, caractérisé en ce que les fibres d'armature comprennent des fibres de polypropylène fibrillées ayant une résistance à la traction d'au moins 4000 kg/cm² et un allongement à la rupture d'au maximum 8%, découpées à une longueur d'environ 12 mm.

5. Procédé selon l'une quelconque des revendications 1 à 4, caractérisé en ce que les fibres de rétention sont choisies dans l'ensemble comprenant des fibres de cellulose raffinée, en particulier des fibres de cellulose raffinée jusqu'à un égouttage de 20 à 60° sur l'échelle Schopper-Riegler, et des fibres de polyéthylène et du polypropylène hautement fibrillées, et en ce qu'elles sont ajoutées en une quantité correspondant à 0,2 à 8% du poids des solides dans la suspension aqueuse.

6. Procédé selon l'une quelconque des revendications 1 à 5, caractérisé en ce que la première étape dans la préparation de la suspension aqueuse comprend la préparation d'une pâte aqueuse de fibres de rétention et d'armature, puis l'addition de particules minérales hydrophiles colloïdales à la pâte, le mélangeage et la mise en suspension des particules dans la phase aqueuse, ce qui est suivi, si on le désire, par l'addition de fibres supplémentaires d'armature et par un mélangeage supplémentaire.

7. Procédé selon l'une quelconque des revendications 1 à 6, caractérisé en ce qu'on ajoute et met en suspension dans la phase aqueuse de la pâte les particules minérales hydrophiles colloïdales sous forme d'une suspension aqueuse.

8. Procédé selon l'une quelconque des revendications 1 à 7, caractérisé en ce que la seconde étape dans la préparation de la suspension aqueuse comprend l'incorporation de particules minérales allongées présentant un rapport de la longueur au diamètre supérieur à 3, de préférence supérieur à 10, et un diamètre inférieur à 0,1 mm, de préférence des fibres de laine minérale ou des cristaux de Wollastonite aciculaire.